# EUROPEAN PATENT SPECIFICATION

(11) **EP 2 409 844 B1**
(45) Date of publication and mention of the grant of the patent: **04.12.2019**
(21) Application number: 09841794.2
(22) Date of filing: 30.06.2009
(51) Int. Cl.: B41J 5/44, B41J 3/36, G06F 17/21, G06F 17/24

(54) **PRINTER DEVICE AND PRINTER SYSTEM**
DRUCKER UND DRUCKERSYSTEM
DISPOSITIF D'IMPRESSION ET SYSTÈME D'IMPRESSION

(30) Priority: 19.03.2009 JP 2009068533
(43) Date of publication of application: 25.01.2012
(73) Proprietor: Sato Holdings Kabushiki Kaisha, Tokyo 153-0064 (JP)
(72) Inventor: NG, Shuping, Singapore 119967 (SG)
(74) Representative: Grünecker Patent- und Rechtsanwälte PartG mbB
(86) International application number: PCT/JP2009/003016
(87) International publication number: WO 2010/106585

(56) References cited:
- JP-A- 3 261 828
- JP-A- 3 261 828
- JP-A- 2000 313 144
- JP-A- 2007 133 719
- US-A1- 2004 218 209
- US-A1- 2005 058 485
- US-A1- 2007 288 843

## Description

### TECHNICAL FIELD

The present invention relates to a printer system comprising a printer device capable of printing character strings of data items that have been previously determined respectively for a plurality of fields that are arranged according to a predetermined label format.

### BACKGROUND ART

Conventionally, there is known a printer device that prints character strings of data items relating to an article for sale such as a material, name, price, and manufacturing date on a label (see Patent Literature 1). Such a printer device stores format data indicating an arrangement of a plurality of fields (printing regions) on a label, and preset data indicating character strings of data items to be printed respectively in the plurality of fields. Then, the printer device prints the character strings of the data items assigned to the respective fields on the label according to the format data and the preset data.

In areas (countries) where people of different nationalities live, it is often desired that character strings of data items carrying the same meaning in a plurality of languages are printed. In this case, the conventional printer device first performs printing of a required number of labels according to preset data indicating the character strings of the respective data items in one language (e.g., English), then rewrites the preset data into preset data for a different language (e.g., French), and further performs printing of a required number of labels according to the latest preset data.

### Patent Literature 1

Japanese Unexamined Patent Application Publication No. 2001-31039

Document US 2005/058485 A1 describes an apparatus for producing small prints, such as labels. A plurality of label layouts is described, which also enable, *inter alia,* a printing of text strings having the same meaning in different languages. Generally, in this connection, a language conversion is described, based on a translation dictionary which becomes involved upon pressing a dedicated "language converting key". More specifically, reference is made to a table, wherein expressions having a particular meaning are arranged in plural languages. Also, the document describes the possibility of printing, on a label, particular information in different languages, in combination with a corresponding logo.

Document US 2004/218209 A1 describes a printing apparatus operating in communication with an external device (such as a computer, a mobile phone or digital camera), wherein print data are obtained from the external device in accordance with conditions set during a pre-communication.

Document JP 3 261828 A describes a display device capable of displaying data items in a plurality of languages. Display of a data item is instructed bv selecting a respective item number.

Document US 2007/0288843 A1 describes an automated layout system comprising a printer connected to a network via a print server and a host computer having a layout editing application program thereon. Further, there are a database server and a file server connected to the network. The layout editing application program is capable of merging data for creating documents from the database with a document template in order to create a document. The storage device of the computer or the file server stores the created document or instructs the printer to print it.

### SUMMARY OF INVENTION

### Technical Problem

According to the conventional printer device of patent literature 1 as it is necessary to rewrite preset data that is internally stored every time when a language for character strings to be printed on labels is switched, this switching operation between languages is cumbersome.

The present invention is made in view of drawbacks of conventional printers, and an object of the present invention is to provide an improved printer system including a printer device capable of printing character strings of data items carrying the same meaning in a plurality of languages, while reducing the necessary memory capacity of the printing device. Solution to Problem
This is achieved by the features of claim 1.

A printer system according to the present invention is capable of printing character strings of data items that have been previously determined respectively for a plurality of fields that are arranged according to a predetermined label format. The printer system includes a printer device comprising: preset data storing means of storing preset data in which character strings of data items to be printed respectively in the plurality of fields are expressed in a plurality of languages, wherein based on the preset data, the character strings of the data items that have been previously determined respectively for the plurality of fields of the label are printed in one or more languages selected from the plurality of languages.

According to this structure, the preset data in which the character strings of the data items to be printed respectively in the plurality of fields are expressed in the plurality of languages is stored in the preset data storing means . Therefore, by selectively using the character strings of the data items expressed in the one or more languages that are needed from the preset data, it is possible to print the character strings expressed in the one or more languages that are needed respectively in the plurality of fields of the label.

Further, for a field for which a character string of a data item is common to the plurality of languages in the preset data, the common character string can be expressed only in a single language.

According to this structure, as there are no overlaps in the data item (e.g., manufacturing date and such) whose character string is common to the plurality of languages in the preset data, this makes a data amount of the preset data smaller. As a result, it is possible to save the capacity of a memory of the printer device.

Moreover, according to the printer device of the present invention, the preset data supplied externally to the printer device can be stored in the preset data storing means. In this case, the preset data can be provided via a predetermined network in response to a request from the printer device, via a user interface such as an operation unit, or via a recording medium.

Furthermore, it is possible that the printer device according to the present invention further includes:
determining means of determining, for each of the plurality of fields in the label, whether to print in the one language or in the more than one language that have been selected from the plurality of languages, wherein according to a result of the determination by the determining means, the character strings of the data items that have been previously determined respectively for the plurality of fields of the label are printed in the one or more languages selected from the plurality of languages.

According to this structure, it is possible to print, in each field in the label, the character string of the data item that has been previously determined for this field in the one or more languages.

According to the present invention, only the preset data extracted from the original preset data in which the character strings of the data items to be printed respectively in the plurality of fields that are arranged according to the predetermined label format are respectively expressed in the plurality of languages, and relating to the more than one language necessary for the printer device is provided for the printer device. Accordingly, the printer device does not have to hold the preset data (original preset data) expressed in all languages. Further, it is possible to update the preset data used by the printer devices respectively in the plurality of printer systems only by collectively updating the original preset data.

The control device can be provided separately from the printer device, or can be implemented as a function of the printer device.

The original preset data acquiring means can be configured to acquire the original preset data from a recording medium such as a CD-ROM, or to include means of receiving the original preset data transmitted via a predetermined network.

### Advantageous Effects of Invention

According to the present invention, by selectively using the character strings of the data items expressed in the one or more languages that are needed from the preset data in which the character strings of the data items to be printed respectively in the plurality of fields are expressed in the plurality of languages, it is possible to print the character strings expressed in the one or more languages that are needed respectively in the plurality of fields on the label. Therefore, it is not necessary to rewrite the preset data every time changing the language to be used, and it is possible to easily print the character strings of the data items carrying the same meaning in the plurality of languages on the label.

According to the present invention, as the printer device does not have to hold the preset data (original preset data) expressed in all languages, it is possible to reduce the capacity of the memory for storing the preset data in the printer device. Moreover, as it is possible to update the preset data used by the printer devices respectively in the plurality of printer systems only by collectively updating the original preset data in the host system, it is possible to improve the efficiency in the update operation.

Furthermore, according to the present invention, names corresponding to languages of different countries of the same item (e.g., name of product) to be printed carry the same meaning in the original preset data. Therefore, it is possible to issue a label on which, for example, along with the name of the product expressed in Japanese, the name of the product expressed in another language, for example, Korean, is printed by the printer device. Accordingly, it is possible to prevent names of the same item from being expressed wrongly between the different languages, and it is possible to eliminate a work of confirming the description even when a Japanese worker who cannot read Korean applies labels on products.

### BRIEF DESCRIPTION OF DRAWINGS

FIG. 1 is an illustration of printer systems each provided with a printer device according to one embodiment of the present invention.
FIG. 2 is a block diagram illustrating an example of a structure of the printer device.
FIG. 3 is a sequence chart showing a flow of a process between a control device and the printer device.
FIG. 4 is a table showing one example of original preset data.
FIG. 5 is a table showing another example of the original preset data.
FIG. 6 is a table showing one example of preset data stored in the printer device.
FIG. 7 is a flowchart showing a flow of a printing process in the printer device.
FIG. 8 is a table showing another example of the preset data.
FIG. 9 is an illustration of one example of a label printed according to the preset data shown in FIG. 8.
FIG. 10 is a flowchart showing another flow of the printing process in the printer device.

### DETAILED DESCRIPTION OF PREFERRED EMBODIMENTS

The following describes an embodiment of the present invention with reference to the drawings.

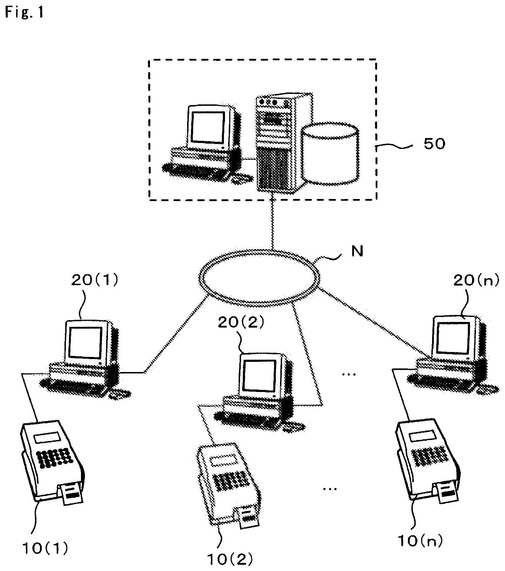

A printer system provided with a printer device according to one embodiment of the present invention is configured as shown in FIG. 1.

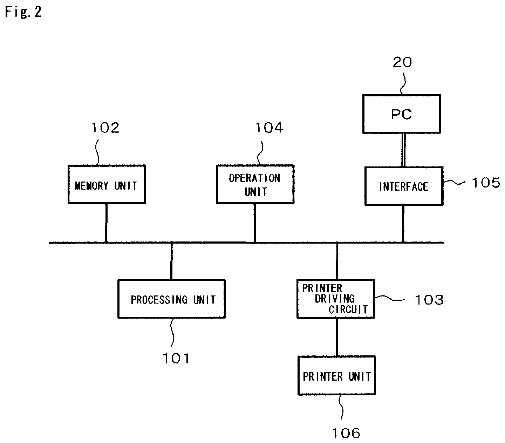

Referring to FIG. 1, for example, a host system 50 is installed in a head office, and a printer device 10(1) and a control device 20(1) connected to the printer device 10(1), a printer device 10(2) and a control device 20(2) connected to the printer device 10(2), ..., and a printer device 10(n) and a control device 20(n) connected to the printer device 10(n) are installed in shops in various regions (countries). Each of the control devices 20(1), 20(2), ..., and 20(n) is configured by a personal computer (PC) and such, and connected to the host system 50 via a predetermined network N (e.g., the Internet). Each printer device 10 (the reference number 10 collectively represents the reference numbers 10(1), 10(2), ... , and 10(n), and hereinafter the same applies) is configured as shown in FIG. 2, for example.

Referring to FIG. 2, the printer device 10 is provided with a processing unit 101 (CPU), a memory unit 102, a printer driving circuit 103 configured to actuate a printer unit 106 that performs label printing, an operation unit 104, and an interface 105 connected to a control device 20 (the reference number 20 collectively represents reference number 20(1), 20(2), and so on, and hereinafter the same applies), and these components are connected with each other via a bus, for example. The processing unit 101 is configured to execute a process according to a signal based on an operation of the operation unit 104. Further, the processing unit 101 is configured to perform data transmission and reception with the control device 20 (PC) via the interface 105. The memory unit 102 is configured to store various data necessary for the process by the processing unit 101.

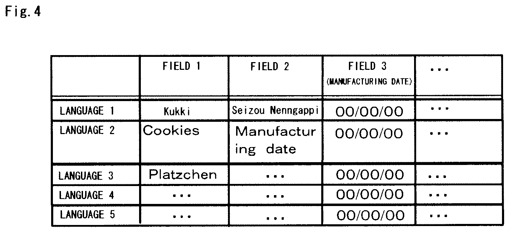

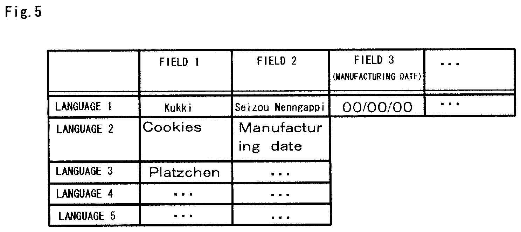

In the host system 50, original preset data in which character strings of data items to be printed respectively in a plurality of fields arranged according to a predetermined label format are expressed in a plurality of languages is generated and stored. The original preset data is defined as shown in FIG. 4, for example, in which: character strings for a data item "Product Type" to be printed in a field 1 are defined as "Kukki" in a language 1, "Cookies" in a language 2, "Platzchen" in a language 3, and so on, character strings for a data item "Subject for Date Field" to be printed in a field 2 are defined as "Seizou Nenngappi" in the language 1, "Manufacturing Date" in the language 2, and so on, and character strings for a data item "Date" to be printed in a field 3 are defined as "00/00/00" in Arabic numbers in all languages. However, as the character strings for the data item "Date" to be printed in the field 3 are the same for all languages (common character string), it is possible to define such a data item only in a single language, for example, only in the language 1 as shown in FIG. 5.

Then, the control device 20 acquires the original preset data delivered from the host system 50 (see FIG. 4 or FIG. 5) via the network N (original preset data acquiring means) . Here, while the original preset data in the host system 50 is editable, it is restricted to edit the original preset data once the control device 20 acquires the original preset data from the host system 50.

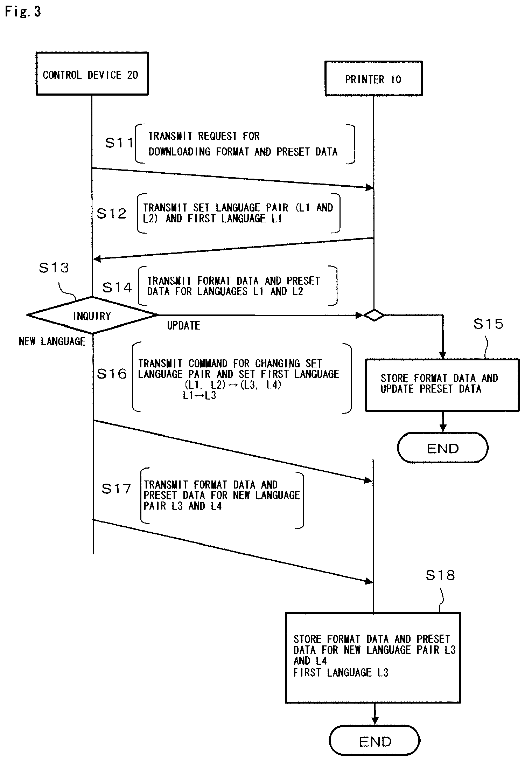

After the control device 20 acquires the original preset data, a process between the control device 20 and the printer device 10 is carried out according to a flow shown in FIG. 3, for example.

Referring to FIG. 3, the control device 20 transmits a request for downloading format data and preset data to the printer device 10, the format data indicating a printing format of labels to be printed (such as information of a field arrangement and a number of languages (1 or 2) to be printed in the respective fields) (S11). Upon reception of the request for downloading, the printer device 10 transmits data, to the control device 20, indicating two languages including a language L1 (first language) and a language L2 that are currently being set (S12). The control device 20 displays the acquired data in a display unit that is not depicted in the drawings, and inquires of an operator whether to update the languages L1 and L2, or to newly transmit languages L3 and L4 (S13) .

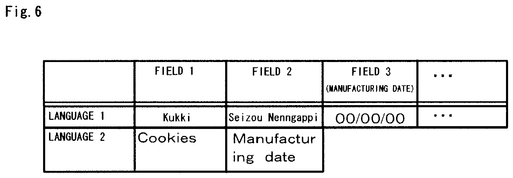

When it has been selected to update the languages L1 and L2, the control device 20 extracts the format data and the preset data corresponding to the languages L1 and L2 (see FIG. 6) from the original preset data recorded in the control device 20, and transmits the extracted data to the printer device 10 (preset data extracting means) (S14) . Upon reception of the format data and the preset data from the control device 20, the printer device 10 stores the format data in the memory unit 102 (preset data storing means), and updates a content of the preset data regarding the languages L1 and L2 that is already stored based on the received preset data regarding the languages L1 and L2 (S15) .

On the other hand, when it has been selected to newly transmit the languages L3 and L4 to the printer device 10, the control device 20 transmits a command to switch to the two languages and the first language that are to be newly set to the printer device 10 (S16). Then, the control device 20 extracts the format data and the preset data corresponding to the languages L3 and L4 (see FIG. 6) from the original preset data recorded in the control device 20, and transmits the extracted data to the printer device 10 (preset data extracting means) (S17) . Then, the printer device 10 stores the new format data and preset data of the two languages L3 and L4 in the memory unit 102 (preset data storing means) in place of the previous format data and preset data (the languages L1 and L2), and sets the language L3 as the first language (S18) . This allows the printer device 10 to perform printing of labels using the new preset data in the languages L3 and L4 (see FIG. 6).

In this case, when the preset data as shown in FIG. 6 is stored in the memory unit 102 of the printer device 10, the data item "Manufacturing Date" whose character string is common to the two languages is defined only in the language 1. This makes a data amount of the preset data relatively small, and consequently it is possible to save the capacity of the memory unit 102.

Further, according to the printer system configured by the control device 20 and the printer device 10, as the printer device 10 does not have to hold the preset data expressed in all languages (original preset data), it is possible to reduce the capacity of the memory unit 102 for storing the preset data (preset data storing means) in the printer device 10. Moreover, as it is possible to update the preset data used by the printer device 10 in each printer system only by collectively updating the original preset data in the host system 50, it is possible to improve the efficiency in the update operation.

According to the embodiment described above, the original preset data in which the character strings of the data items to be printed are expressed in the plurality of languages is generated in the host system 50, and the original preset data is delivered to the control device 20 of each printer system from the host system 50 via the network N. However, original preset data generated by one computer (PC) can be recorded in a recording medium such as a CD-ROM, and then the recorded original preset data can be provided for the control device 20 of each printer system by way of the recording medium.

Further, according to the embodiment described above, the control device 20 acquires the original preset data delivered from the host system 50 (see FIG. 4 or FIG. 5), and the printer device 10 transmits the two languages L1 and L2 that are currently set along with the language L1 as the first language to the control device 20 in response to the download request by the control device 20, and receives either the preset data for updating the two languages L1 and L2 (see FIG. 6) or the preset data for replacing with the languages L3 and L4 (see FIG. 6). However, it is possible to configure such that the printer device 10 directly communicates with the host system 50.

In the system structure in which the printer device 10 and the host system 50 directly communicate with each other via a predetermined network, in response to a request from the printer device 10 for the preset data for the two languages, the host system 50 can generate the preset data for the two languages relating to the request from the original preset data, and deliver the generated preset data to the printer device 10. In this case, it is possible to make an alteration appropriately such that the selection between the languages L1 and L2, and the languages L3 and L4 can be performed using the operation unit 104 of the printer device 10.

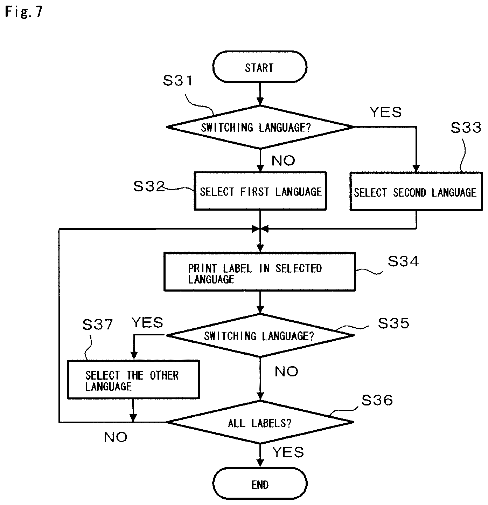

The printer device 10 that stores the format data and the preset data in the memory unit 102 in this manner performs the printing process according to a procedure as shown in FIG. 7, for example.

Referring to FIG. 7, the printer device 10 determines whether or not an operation of switching the languages has been made after starting up (S31) . If the switching of the languages has not been made (NO in S31), the printer device 10 selects the previously set first language out of the two languages (S32), and performs the label printing using the preset data (e.g., see FIG. 6) and the format data stored in the memory unit 102 (S34) . Specifically, when performing the label printing in the first language (the language 1) using the preset data shown in FIG. 6, "Kukki" in the field 1, "Seizou Nenngappi" in the field 2, a numerical string "00/00/00" in the field 3, and so on are printed on a label.

Subsequently, the printer device 10 determines whether or not the switching of the languages has not been made (S35), and whether or not printing of a set number of labels has been completed (S36). Then, if the switching of the languages has not been made (NO in S35) and if the printing of all the labels has not been completed (NO in S36), the printing of the next label is performed in the same manner (S34) . Thereafter, until the printing is completed for all the labels (NO in S36), the printer device 10 continues the printing of the labels in the first language (the language 1) according to the preset data (S34) . Upon completion of the printing of all the labels (YES in S36), the printer device 10 terminates the process of label printing.

On the other hand, if the switching of the languages has not been made after starting up of the printer device 10 (YES in S31), the printer device 10 selects a second language out of the two languages (S33), and performs the label printing using the preset data stored in the memory unit 102 (S34). Specifically, when performing the label printing in the second language (the language 2) using the preset data shown in FIG. 6, "Cookies" in the field 1, "Manufacturing Data" in the field 2, the numerical string "00/00/00" in the field 3, and so on are printed on a label. Then, as described previously, until the printing is completed for the set number of labels (YES in S36), the label printing is performed in the second language (the language 2) (S34, S35, and S36).

In the process of the label printing in the first language (the language 1) or in the second language (the language 2) as described above (S34-S36), when the switching of the languages is made (YES in S35), the language is switched to a language that is different from the currently selected language (S37), and the label printing is performed according to the preset data for the switched language.

According to the printer device 10 as described above, by selectively using the character strings of the data items expressed in the language that is needed from the preset data in which the character strings of the data items to be printed respectively in the plurality of fields are expressed in the two languages (see FIG. 6), it is possible to print the character strings expressed in the language that is needed respectively in the plurality of fields on the label (see the process flow in FIG. 7). Therefore, it is not necessary to rewrite the preset data every time changing the language to be used, and it is possible to easily print the character strings of the data items carrying the same meaning in the two languages on the label.

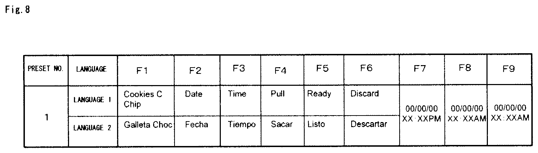

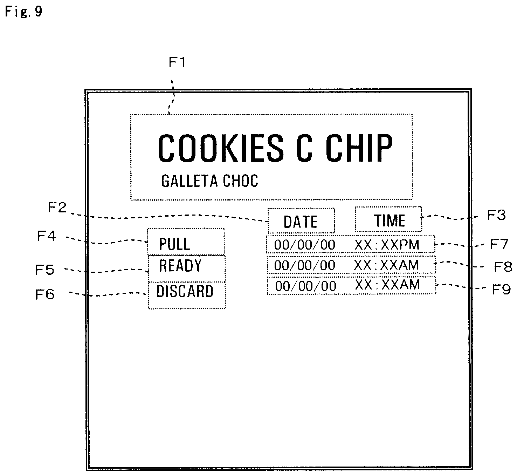

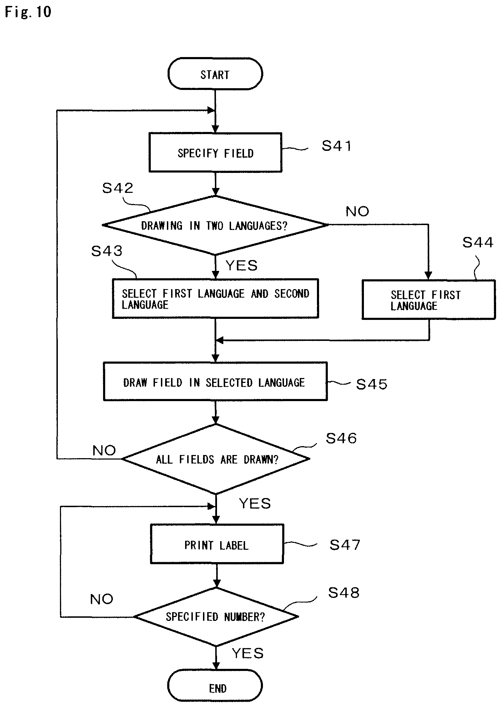

Further, unlike the above example, the printer device 10 can selectively execute, respectively for the plurality of fields, drawing in a single language (the first language) and drawing in two languages (the first language and the second language) based on a field attribute of the printing format that has been acquired along with the preset data. For example, it is possible to perform the label printing as shown in FIG. 9 using the preset data as shown in FIG. 8. Specifically, a character string "Cookies C Cip" in the first language (the language 1, English) and a character string "Galleta Choc" in the second language (the language 2, Spanish) for the same data item (Product Type) are drawn in the field 1 (F1), and the character strings "Date", "Time", "Pull", "Ready", "Discard", "00/00/00 XX:XX PM", "00/00/00 XX:XX AM", and "00/00/00 XX:XX AM" are drawn and printed only in the first language (the language 1, English) in the other fields (F1-F9). Such label printing can be realized by the printing process according to the procedure in the printer device 10 shown in FIG. 10.

Referring to FIG. 10, the printer device 10 specifies a field on the label to be drawn (S41), and determines whether or not to draw the field attribute of the format data in two languages (S42). If the field attribute is to be drawn in two languages (YES in S42), the printer device 10 selects the first language and the second language (S43), draws the character string in the first language and the character string in the second language defined for the specified field in the preset data stored in the memory unit 102 (see FIG. 8) in the specified field on the label (S45). For example, the character string "Cookies C Chip" in the first language and the character string "Galleta Choc" in the second language defined for the field 1 (F1) in the preset data shown in FIG. 8 are drawn in the field 1 (F1) on the label (see FIG. 9).

Upon completion of the drawing to the specified field, the printer device 10 determines whether or not the drawing for all the fields has been completed (S46). If the drawing for all the fields has not been completed yet (NO in S46), the printer device 10 specifies the next field (S41), and determines whether or not to draw the next field attribute of the format data in two languages (S42). In this case, if the field attribute has not been determined to be drawn in two languages (NO in S42), the printer device 10 selects the first language (S44), and draws the character string in the first language defined for the specified field in the preset data stored in the memory unit 102 (see FIG. 8) in the specified field on the label (S45) . For example, the character string (Date) in the first language defined for the field 2 (F2) in the preset data shown in FIG. 8 is drawn in the field 2 (F2) of the label (see FIG. 9).

Thereafter, the same process (S41, S42, S43 (S44), and S45) is repeatedly executed, and when it is determined that the drawing has been completed for all the fields of the label (YES in S46), the printer unit 106 performs printing and issuing (S47) . Then, it is determined whether or not the issuing for the specified printing number has been completed (S48) . If not completed (NO in S48), the printing and issuing (S47) is repeated, and if completed all the issuing (YES in S48), the process is terminated. As a result of this process, the specified number of labels printed as shown in FIG. 9 are issued, for example.

According to this printing process, by using the preset data in which the character strings of the data items to be printed in the plurality of fields are expressed respectively in two languages (see FIG. 8) based on the field attribute of the printing format that has been acquired along with the preset data, it is possible to selectively set the character strings in two languages or the character strings in a single language for each of the plurality of fields (see FIG. 9 and FIG. 10). Accordingly, it is possible to easily switch for each field between the printing in two languages and the printing in a single language.

According to the embodiment described above, the preset data used in each printer device 10 is for two languages. However, the preset data can be for more than two languages.

### INDUSTRIAL APPLICABILITY

The printer system according to the present invention provides an advantageous effect of being able to easily print the character strings of the data items carrying the same meaning in the plurality of languages, and is useful as a printer system that prints the character strings of the data items that have been previously determined respectively for the plurality of fields that are arranged according to the predetermined label format.

### Reference Signs List

- 10, 10(1), 10(2), 10(n): Printer Device
- 20, 20(1), 20(2), 20(n): Control Device
- 50: Host System
- 101: Processing Unit
- 102: Memory Unit
- 103: Printer Driving Circuit
- 104: Operation Unit
- 105: Interface
- 106: Printer Unit

## Claims

1. A printer system comprising
a printer device (10) arranged to print character strings of data items that have been previously determined respectively for a plurality of fields (F1; ...; F9) that are arranged according to a predetermined label format, wherein the printer device (10) includes:
preset data storing means (102) for storing preset data in which character strings of data items to be printed respectively in the plurality of fields (F1, ..., F9) are expressed in more than one language necessary for the printer device (10) out of a plurality of languages, wherein
based on the preset data, the character strings of the data items that have been previously determined respectively for the plurality of fields (F1,..., F9) of the label are printed in one or more languages selected from the plurality of languages;
**characterized by**
a control device (20) connected to the printer device (10), wherein the control device (20) includes:
original preset data acquiring means for acquiring original preset data in which character strings of data items to be printed respectively in a plurality of fields (F1, ..., F9) that are arranged according to a predetermined label format are expressed in the plurality of languages;
preset data extracting means for extracting preset data from the acquired original preset data, the extracted preset data relating to the more than one language necessary for the printer device (10); and
transmitting means for transmitting the extracted preset data relating to the more than one language to the printer device (10), wherein
the printer device (10) is adapted to store the preset data relating to the more than one language that has been transmitted from the control device (20) in the preset storing means (102).

2. The printer system according to claim 1, wherein for a field (F1, ..., F9) for which a character string of a data item is common to the more than one language in the preset data, the common character string is expressed only in a single language.

3. The printer system according to one of claims 1 and 2, wherein the preset data supplied externally to the printer device (10) is stored in the preset data storing means (102).

4. The printer system according to one of claims 1 to 3, wherein the printer device (10) further comprising:
determining means (101) for determining; for each of the plurality of fields (F1, ..., F9) in the label, whether to print in the one language or in the more than one language that has been selected from the plurality of languages, wherein
according to a result of the determination by the determining means (101), the character strings of the data items that have been previously determined respectively for the plurality of fields (F1, ..., F9) of the label are printed in the one or more languages selected from the plurality of languages.

5. The printer system according to any of claims 1 to 4, wherein the original preset data acquiring means includes means for receiving the original preset data transmitted via a predetermined network (N).

## Patentansprüche

1. Druckersystem, umfassend:
eine Druckereinrichtung (10), eingerichtet, um Zeichenketten von Datenelementen, die zuvor jeweils für eine Mehrzahl von Feldern (F1; ...; F9), die gemäß einem vorbestimmten Etikettenformat angeordnet sind, bestimmt worden sind, wobei die Druckereinrichtung (10) enthält:
eine Speichereinrichtung (102) für voreingestellte Daten zum Speichern voreingestellter Daten, in welchen Zeichenketten von jeweils in der Mehrzahl von Feldern (F1, ..., F9) zu druckenden Datenelementen in mehr als einer für die Druckereinrichtung (10) erforderlichen Sprache aus einer Mehrzahl von Sprachen ausgedrückt sind, wobei
beruhend auf den voreingestellten Daten, die Zeichenketten der Datenelemente, die zuvor jeweils für die Mehrzahl von Feldern (F1, ..., F9) des Etiketts bestimmt worden sind, in einer oder mehreren aus der Mehrzahl von Sprachen ausgewählten Sprachen gedruckt werden;
**gekennzeichnet durch**
eine Steuereinrichtung (20), verbunden mit der Druckereinrichtung (10), wobei die Steuereinrichtung (20) enthält:
eine Beschaffungseinrichtung für originale voreingestellte Daten zum Beschaffen originaler voreingestellter Daten, in welchen Zeichenketten von jeweils in einer Mehrzahl von Feldern (F1, ..., F9), die gemäß einem vorbestimmten Etikettenformat angeordnet sind, zu druckenden Datenelementen in der Mehrzahl von Sprachen ausgedrückt sind;
eine Extraktionseinheit für voreingestellte Daten zum Extrahieren voreingestellter Daten aus den beschafften originalen voreingestellten Daten, wobei die extrahierten voreingestellten Daten sich auf die mehr als eine für die Druckereinrichtung (10) erforderliche Sprache beziehen; und
eine Übertragungseinrichtung zum Übertragen der extrahierten voreingestellten Daten, die sich auf die mehr als eine Sprache beziehen, zu der Druckereinrichtung (10), wobei
die Druckereinrichtung (10) angepasst ist, die voreingestellten Daten, die sich auf die mehr als eine Sprache beziehen, die von der Steuereinrichtung (20) übertragen worden sind, in der Speichereinrichtung (102) für voreingestellte Daten zu speichern.

2. Druckersystem nach Anspruch 1, wobei für ein Feld (F1, ..., F9), für welches eine Zeichenkette eines Datenelements für die mehr als eine Sprache in den voreingestellten Daten gemeinsam ist, die gemeinsame Zeichenkette nur in einer Sprache ausgedrückt ist.

3. Druckersystem nach einem der Ansprüche 1 und 2, wobei die der Druckereinrichtung (10) extern zugeführten voreingestellten Daten in der Speichereinrichtung (102) für voreingestellte Daten gespeichert werden.

4. Druckersystem nach einem der Ansprüche 1 bis 3, wobei die Druckereinrichtung (10) weiterhin umfasst:
eine Bestimmungseinrichtung (101) zum Bestimmen, für jedes der Mehrzahl von Feldern (F1, ..., F9) auf dem Etikett, ob in der einen Sprache oder in der mehr als einen Sprache, die aus der Mehrzahl von Sprachen ausgewählt wurde, zu drucken ist, wobei
gemäß dem Ergebnis der Bestimmung durch die Bestimmungseinrichtung (101) die Zeichenketten der Datenelemente, die zuvor jeweils für die Mehrzahl von Feldern (F1, ..., F9) bestimmt worden sind, in der einen oder den mehreren Sprachen, ausgewählt aus der Mehrzahl von Sprachen, gedruckt werden.

5. Druckersystem nach einem der Ansprüche 1 bis 4, wobei die Beschaffungseinrichtung für originale voreingestellte Daten eine Einrichtung zum Empfangen der über ein vorbestimmtes Netz (N) übertragenen originalen voreingestellten Daten enthält.

## Revendications

1. Système d'imprimante comprenant
un dispositif d'imprimante (10) agencé pour imprimer des chaînes de caractères d'éléments de données précédemment déterminés respectivement pour une pluralité de champs (F1,...,F9) qui sont agencées conformément à un format d'étiquette prédéterminé, dans lequel le dispositif d'imprimante (10) comprend :
un moyen de stockage de données préétablies (102) pour stocker des données préétablies dans lesquelles des chaînes de caractères d'éléments de données à imprimer respectivement dans la pluralité de champs (F1,...,F9) sont exprimées dans plusieurs langues nécessaires pour le dispositif d'imprimante (10) parmi une pluralité de langues, dans lequel
sur base des données préétablies, les chaînes de caractères des éléments de données qui ont été précédemment déterminés respectivement pour la pluralité de champs (F1,..., F9) de l'étiquette sont imprimées dans une ou plusieurs langues sélectionnées parmi la pluralité de langues ;
**caractérisé par**
un dispositif de commande (20) connecté au dispositif d'imprimante (10), dans lequel le dispositif de commande (20) comprend :
un moyen d'acquisition de données préétablies originelles pour acquérir des données préétablies originelles dans lesquelles des chaînes de caractères d'éléments de données à imprimer respectivement dans la pluralité de champs (F1,...,F9) qui sont agencées conformément à un format d'étiquette prédéterminé sont exprimées dans ladite pluralité de langues ;
un moyen d'extraction de données préétablies pour extraire des données préétablies à partir des données préétablies originelles acquises, les données préétablies extraites ayant trait auxdites plusieurs langues nécessaires pour le dispositif d'imprimante (10) ; et
un moyen de transmission pour transmettre les données préétablies extraites relatives auxdites plusieurs langues au dispositif d'imprimante (10), dans lequel
le dispositif d'imprimante (10) est adapté pour stocker les données préétablies relatives auxdites plusieurs langues qui ont été transmises par le dispositif de commande (20) dans le moyen de stockage préétabli (102).

2. Système d'imprimante selon la revendication 1, dans lequel, pour un champ (F1,...,F9) où une chaîne de caractères d'un élément de données est commune auxdites plusieurs langues dans les données préétablies, la chaîne de caractères commune est exprimée dans une seule langue.

3. Système d'imprimante selon l'une des revendications 1 et 2, dans lequel les données préétablies fournies de manière externe au dispositif d'imprimante (10) sont stockées dans le moyen de stockage de données préétablies (102) .

4. Système d'imprimante selon l'une des revendications 1 à 3, dans lequel le dispositif d'imprimante (10) comprend en outre :
un moyen de détermination (101) destiné à déterminer, pour chaque champ de la pluralité de champs (F1,...,F9) dans l'étiquette, s'il faut imprimer ou non dans ladite une langue sélectionnée, ou dans lesdites plusieurs langues sélectionnées, parmi la pluralité de langues, dans lequel
conformément à un résultat de la détermination par le moyen de détermination (101), les chaînes de caractères des éléments de données qui ont été précédemment déterminés respectivement pour la pluralité de champs (F1,...,F9) de l'étiquette sont imprimées dans lesdites une ou plusieurs langues sélectionnées parmi la pluralité de langues.

5. Système d'imprimante selon l'une quelconque des revendications 1 à 4, dans lequel le moyen d'acquisition de données préétablies originelles comprend un moyen de réception des données préétablies originelles transmises via un réseau prédéterminé (N).
